# EUROPÄISCHE PATENTANMELDUNG

(11) **EP 4 699 444 A1**
(43) Veröffentlichungstag der Anmeldung: **25.02.2026**
(21) Anmeldenummer: 25197119.8
(22) Anmeldetag: 20.08.2025
(51) Int. Cl.: A21B 3/15, A21B 3/13

(54) **BACKBLECH**

(30) Priorität: 20.08.2024 DE 102024123745
(71) Anmelder: Kempf, Axel, 85296 Rohrbach (DE); Stadler, Marion, 85296 Rohrbach (DE)
(72) Erfinder: Kempf, Josef, 85296 Rohrbach (DE)
(74) Vertreter: HGF

(57) **Zusammenfassung**

Die vorliegende Erfindung betrifft ein Backblech für industriell betriebene Backanlagen mit einem Rahmen und einem Inlay, wobei das Inlay als Muldenblech mit regelmäßigen Mulden ausgebildet ist. Das Muldenblech ist aus einem Lochblech aus Aluminium oder einer Aluminiumlegierung mit einer Dicke von nicht mehr als 1,3 mm oder aus einem Streckmetall aus Aluminium oder einer Aluminiumlegierung ausgebildet. Der Rahmen ist aus einem im Querschnitt rechteckigen Hohlprofil aus Stahl oder einem rechteckigen Hohlprofil oder einen Vollkörper aus einem Hochtemperaturkunststoff ausgebildet. Das Inlay weist an seinen Längsseiten bzw. Längsrändern Leisten auf, welche jeweils im Bereich einer jeden Mulde mit dem Muldenblech verbunden sind, wobei die Leisten mit lösbaren Verbindungselementen am Rahmen befestigt sind.

## Beschreibung

Die Erfindung betrifft ein Backblech für industriell betriebene Backanlagen umfassend einen Rahmen und ein Inlay, wobei das Inlay als Muldenblech mit regelmäßigen Mulden ausgebildet ist.

In der WO 2023/037351 A1 ist ein Backblech beschrieben, das ein austauschbares Inlay aufweist, das mittels Klammern an einem Stützrahmen befestigbar ist. Das Inlay kann ebenflächig ausgebildet sein. Es kann aber auch mit parallel zueinander verlaufenden Mulden versehen sein.

Aus der EP 2708129 B1 geht ein Backblech hervor, bei dem das Inlay durch Bördeln oder Crimpen von am Inlay ausgebildeten Laschen um einen Vorsprung am Stützrahmen an diesem befes-tigt werden. Das Backblech kann ebenflächig oder als Muldenbackblech ausgebildet sein.

Ein weiteres Muldenbackblech geht aus der WO 2015/044588 A1 hervor, bei dem jede Mulde#n jeweils aus einem separaten Blechteil ausgebildet ist, wobei die Mulden einzeln an einem Rahmen befestigt sind.

Aus der US 2022/0322682 A1 geht ein Muldenbackblech hervor, bei dem ein Inlay schwimmend auf einem Tragrahmen angeordnet ist. Das Inlay bildet eine Reihe paralleler Mulden aus. Die nach oben vorstehenden Bereiche zwischen den einzelnen Mulden werden jeweils von einer Traverse eines Stützrahmens unterstützt. Das Inlay ist aus einem Streckmetallblech mit Mikroöffnungen ausgebildet, die ein Metallgitter bilden. Das Streckmetallblech wird durch Schneiden und Strecken eines Metallblechs hergestellt. Die Mikroöffnungen haben Durchgangsöffnungen zwischen 130 und 750 µm. Aufgrund der Mikroöffnungen weist das Streckmetallblech eine Öffnungsfläche auf, die zwischen 17 und 60 % der Gesamtoberfläche des Blechs ausmacht. Der Rahmen mit den daran ausgebildeten Traversen ist zwar sehr stabil aber auch sehr schwer.

In der US 2017/0318820 A1 ist ein weiteres Muldenbackblech offenbart, das mit einem Fluorharzfilm mit einer Dicke von 75 bis 500 µm durch Wärmebindung auf ein Metallsubstrat 1 laminiert ist und in das eine viele Löcher gestanzt sind. Das Backblech soll ausgezeichnete Trenneigenschaften aufweisen, da der Teig während eines Brotbackvorgangs nur mit der Fluorharzfolie in Kontakt kommt. Hierbei ist ein Muldenblech mittels Schrauben an einem Rahmen befestigt, wobei in jedem Muldenboden eine Schraube angeordnet ist. Das Austauschen des Muldenbleches ist sehr aufwendig, da eine Vielzahl von Schraubverbindungen geöst und wieder neu erstellt werden müssen.

Ein weiteres Muldenbackblech ist aus der WO 2005/092007 A2 bekannt, das aus einem wellig geformten Blech und zwei an Stirnseiten des Bleches befestigten Leisten ausgebildet ist. Die Leisten sind aus Aluminium gefertigt. Die Längskanten des Muldenbleches sind aus dem umgebördelten Blech ausgebildet. Das Blech kann aus Aluminium oder Edelstahl hegestellt sein. Dieses Muldenbackblech ist sehr einfach ausgebildet. In industriellen Backstraßen verursacht jedoch die Stützstruktur, die hier aus zwei Aluminiumleisten ausgebildet ist, und die Längskanten, wenn das Blech aus Aluminium gefertigt ist, einen erheblichen Abrieb in der Backstraße, da Aluminium ein relativ weiches und nicht abriebfestes Material ist. Der Abrieb kann zu Verunreinigungen der Backware führen. Ist das Blech hingegen aus Edelstahl ausgebildet, dann ist der Abrieb geringer, aber Bleche aus Edelstahl sind für den Backvorgang nachteilig, da aufgrund der schlechteren Wärmeleitung gegenüber Aluminium die Backware an der Unterseite, an der sie am Backblech aufliegt, langsamer erhitzt wird. Diese Backblech ist konstruktionsbedingt nur für kleine Größen geeignet. Großflächige Backbleche mit einer Fläche von z.B. 0,8 m x 2 m können so nicht gefertigt werden, da diese Konstruktion zu instabil ist.

In der EP 2 014 171 B1 ist ein Muldenbackblech gezeigt, das spezielle Sicherungselemente, insbesondere Schnellverschlüsse, zum Befestigen eines Inlays an einen Rahmen aufweist. Der Rahmen weist rohrförmige Längsstreben auf, in welche sich in Längsrichtung verschiebliche U-Profile befinden, die als Sicherungselemente dienen. Durch das Verschieben der Sicherungselemente können mehrere Bolzen, welche das muldenförmige Backblech durchgreifen, auf einmal gesichert oder wieder gelöst werden. Hierdurch wird ein schneller Austausch des Backbleches ohne Werkzeug ermöglicht. Dieser Schnellverschluss verursacht ein erhebliches Gewicht. Zudem sind die Backbleche ohne Rahmen entweder sehr labil und können bei der Handhabung leicht beschädigt werden oder aus einem dicken, stabilen Blech ausgebildet, das wiederum schwer ist.

Die DE 8609395 U1 betrifft eine kastenförmige Gährvorrichtung für Teigformlinge von Backwaren, insbesondere von Brötchen. Die Gährvorrichtung besteht aus einem Rahmen, dessen Höhe etwas höher als das aufgegangene Backwerk ist. Außerdem umfasst die Gährvorrichtung einen Boden, der durch parallele Stege oder Leisten gestützt ist, die einen Abstand zueinander haben, dass sie eine der Größe der Formlinge entsprechende Unterteilung des Bodens bilden.

In der DE 8701983U1, wird ein Backwarenträger beschrieben, mit dem eine verbesserte Behandlung von Teiglingen beim Einfrieren und Auftauen erreicht werden soll. Vorgeschlagen wird ein Lochblech aus Metall, insbesondere Aluminium, zu verwenden, wodurch zudem Energie eingespart werden soll. Über das Lochblech wird ein Gewebe gelegt und an den Seiten umgeschlagen, so dass ein äußerer Rahmen von außen das Gewebe einzwängen und halten kann.

Herkömmliche Muldenbackbleche sind oftmals sehr schwer, was einerseits eine hohe Wärmekapazität und damit einen hohen Energieverbrauch in Backstraßen verursacht und andererseits die Handhabung des Muldenbackblechs durch das Personal schwierig macht.

Zudem weisen herkömmliche Muldenbackbleche oftmals Befestigungsmittel, wie z.B. Nieten oder dergleichen auf, um das Inlay am Rahmen zu befestigen. Der Austausch des Inlays ist hierbei sehr aufwendig, da die Nieten herausgebohrt werden müssen und im Rahmen zum Setzen von neuen Nieten neue Bohrungen eingebracht werden müssen. Dies begrenzt die Lebensdauer der Rahmen und macht es erforderlich, dass der Austausch von Inlays nur durch Fachbetriebe vorgenommen wird, so dass der Betreiber einer industriellen Backstraße oftmals nicht selbst in der Lage ist, eigenständig die Inlays auszutauschen. Die Inlays besitzen in der Regel eine Anti-Haft-Schicht, welche sich nach einem gewissen Gebrauch abnutzt und den Austausch des Inlays erfordert. Zudem besteht die Gefahr, dass sich die Nieten lösen und im schlimmsten Fall in die Backware gelangen. Deshalb gibt es bereits Backstraßen mit Metalldetektoren, welche die Backware kurz vor dem Verlassen der Backstraße auf Metallgegenstände untersucht.

Auch ein Abrieb des Muldenbackblechs kann zur Verunreinigungen von Backwaren führen.

Der Erfindung liegt die Aufgabe zugrunde, ein Muldenbackblech zu schaffen, das einen sehr effizienten Betrieb, insbesondere in einer industriellen Backstraße, erlaubt.

Eine weitere Aufgabe der Erfindung ist es, ein Muldenbackblech zu schaffen, das eine lange Lebensdauer besitzt.

Eine weitere Aufgabe ist es, ein Muldenbackblech zu schaffen, das einfach zu handhaben und zu warten ist.

Eine oder mehrere der Aufgaben werden durch ein Muldenbackblech gemäß dem unabhängigen Patentanspruch gelöst. Vorteilhafte Ausgestaltungen sind in den hiervon abhängigen Ansprüchen aufgeführt.

Nach einem Aspekt der vorliegenden Erfindung wird ein Backblech für industriell betriebene Backanlagen, umfassend einen Rahmen und ein Inlay, vorgesehen, wobei das Inlay als Muldenblech mit regelmäßigen Mulden ausgebildet ist und das Muldenblech aus einem Lochblech aus Aluminium oder einer Aluminiumlegierung mit einer Dicke von nicht mehr als 1,3 mm, insbesondere nicht mehr als 1,15 mm, oder
aus einem Streckmetall aus Aluminium oder einer Aluminiumlegierung ausgebildet ist. Der Rahmen ist aus einem querschnittrechteckigen Hohlprofil aus Stahl oder einem rechteckigen Hohlprofil oder einem Vollkörper aus einem Hochtemperaturkunststoff ausgebildet. Das Inlay weist an seinen Längsrändern Leisten auf, welche jeweils im Bereich einer jeden Mulde mit dem Muldenblech verbunden sind, wobei die Leisten mit lösbaren Verbindungselementen am Rahmen befestigt sind.

Ein solches Backblech, bei dem das Muldenblech aus Aluminium oder einer Aluminiumlegierung ausgebildet ist, weist ein sehr gutes Backverhalten auf, da Aluminium ein guter Wärmeleiter ist und die Backware auch schnell von unten erhitzt wird. Da der Rahmen aus Stahl oder aus einem Hochtemperaturkunststoff ausgebildet ist, unterliegt er nur einem geringen Abrieb beim Gebrauch in einer industriellen Backstraße. Hierdurch wird die Verunreinigung von Backwaren vermieden.

Da an den Längsrändern des Muldenblechs Leisten vorgesehen sind, die jeweils im Bereich einer jeden Mulde mit dem Muldenblech verbunden sind, bildet die Einheit aus Muldenblech und den Leisten einen eigensteifen Körper, der das Inlay bildet, der einfach und zuverlässig gehandhabt werden kann. Beim Transport des Inlays ist aufgrund der Versteifung durch die Leisten die Gefahr gering, dass das Inlay beschädigt wird. Zudem kann das Muldenblech aus einem sehr dünnen Lochblech im Vergleich zu herkömmlichen Backblechen ausgebildet sein, da durch die Versteifung mittels der Leisten die Form des Muldenblechs zuverlässig gehalten wird. Ein dünnes Muldenblech weist ein geringes Gewicht und eine geringe Wärmekapazität auf. Ein geringes Gewicht bedeutet einen geringen Energieverbrauch aufgrund der geringen Wärmekapazität in einer industriellen Backstraße, da einerseits weniger Wärme zum Erhitzen des Backblechs notwendig ist und andererseits beim Ausschleusen des Backblechs aus der Backstraße entsprechend weniger Wärme pro Backblech abgezogen wird. Die geringe Wärmekapazität verringert auch den Energieverbrauch beim Frosten der Backware, wenn die Backware auf dem Backblech aufliegend in eine Frostvorrichtung eingeführt wird. Zudem kann ein leichtes Backblech vom Personal einfacher gehandhabt werden.

Die Ausbildung des Backblechs aus einem eigensteifen Inlay in Kombination mit einem abriebfesten Rahmen erlaubt zudem ein einfaches, nachträgliches Austauschen des Inlays am Rahmen, das insbesondere auch vom Personal vorgenommen wird, das zum Betreiben einer industriellen Backstraße vorgesehen ist. Ein solches Backblech muss zum Austausch des Inlays nicht zu einem entsprechenden Fachbetrieb gesendet werden.

Zusammenfassend kann somit festgehalten werden, dass das erfindungsgemäße Backblech leicht ist, womit der Energieverbrauch in einer industriellen Backstraße gering gehalten wird, und einfach handhabbar ist und dass das Inlay einfach ausgetauscht werden kann. Zudem verursacht es wenig Abrieb im Backprozess, wodurch die Qualität der Backware hochgehalten wird.

Vorzugsweise ist das Hohlprofil des Rahmens aus zwei Breitseitenwandungen und zwei Schmalseitenwandungen ausgebildet, wobei die Breitseitenwandungen breiter als die Schmalseitenwandungen sind und die Schmalseitenwandungen etwa parallel zum Inlay und die Breitseitenwandungen etwa senkrecht zum Inlay angeordnet sind. Hiermit wird ein schlanker Rahmen vorgesehen, der eine hohe Festigkeit bei einer Belastung des Backblechs senkrecht auf die Ebene des Muldenblechs bereitstellt. Die Breitseitenwandungen sind vorzugsweise um ein Vielfaches, insbesondere um das Doppelte größer als die Schmalseitenwandungen.

Die Breitseitenwandungen des Rahmens können eine Breite von zumindest 10 mm, insbesondere zumindest 15 mm bzw. zumindest 20 mm aufweisen.

Die Schmalseitenwandungen des Rahmens können eine Breite von zumindest 5 mm und insbesondere von zumindest 8 mm aufweisen. Vorzugsweise sind die Schmalseitenwandungen nicht mehr als 15 mm und insbesondere nicht mehr als 10 mm breit.

Der Rahmen kann aus zwei geradlinigen Hohlprofilen ausgebildet sein, die Längsstreben bilden und an ihren Enden mit jeweils einem Halteblech verbunden sind. Das Halteblech bildet einen zum Innenbereich des Backbleches offenen Hohlraum zum Aufnehmen jeweils eines stirnseitigen Endbereichs des Inlays.

Der Rahmen kann eine oder mehrere Querstreben aufweisen. Die Querstreben dienen zur Versteifung des Rahmens. Die Querstreben können aus rohrförmigen Stangen mit kreisförmigem Querschnitt ausgebildet sein.

Am Muldenblech sind vorzugsweise Laschen angeformt, die in entsprechenden Ausnehmungen in den Leisten eingreifen oder von umgebördelten Abschnitten der Leisten umgriffen und eingeklemmt werden. Hierdurch wird eine Verbindung zwischen dem Muldenblech und den Leisten geschaffen, die keine zusätzlichen Verbindungselemente wie Schrauben oder dergleichen benötigt. Dabei besteht auch keine Gefahr, dass sich zusätzliche Verbindungselemente beim Betrieb des Backblechs lösen und in die Backware gelangen. Hierdurch wird eine sehr leichte Ausgestaltung des Inlays bewirkt, die zudem eine hohe Eigensteifigkeit aufgrund der konturierten Form des Muldenblechs und des gebördelten Abschnitts der Leisten besitzt, selbst wenn das Muldenblech und die Leisten jeweils aus einem dünnen Material ausgebildet sind. Die Laschen sind vorzugsweise im Bereich eines jeden Bodens einer jeden Mulde ausgebildet. Die Laschen können einstückig am Muldenblech angeformt sein.

Die Laschen können auch mittels einer Presspassung oder stoffschlüssigen Verbindung (Klebeverbindung, Lötverbindung, Schweißverbindung) an den Leisten befestigt sein.

Die Leisten des Inlays können mittels einer Klemmverbindung, Rastverbindung oder Schraubverbindung am Rahmen befestigt sein.

Der Rahmen kann Rastmittel aufweisen, welche mit entsprechenden an den Leisten vorgesehenen Gegenrastmitteln zum Fixieren des Inlays am Rahmen zusammenwirken.

Die Rastmittel und Gegenrastmittel können federbeaufschlagte Rastvorsprünge und entsprechende Rastausnehmungen, insbesondere sich in Längsrichtung der jeweiligen Leisten erstreckende Langlöcher, umfassen. Die Rastvorsprünge können durch federbeaufschlagte Kugeln ausgebildet sein.

Die Längsstreben des Rahmens sind aus Stahl und insbesondere aus Nickel-Chrom-Stahl ausgebildet. Das Halteblech kann sowohl aus Aluminium bzw. einer Aluminiumlegierung oder Stahl, insbesondere Nickel-Chrom-Stahl, ausgebildet sein.

Der Rahmen kann alternativ auch aus einem hochtemperaturstabilen Kunststoff ausgebildet sein. Derartige hochtemperaturstabile Kunststoffe sind zum Beispiel Peek, glasfaserverstärktes Peek, Perfluoralkoxycopolymere (PFA), Polyimid, Polyamidimid (PAI), Polysulfon (PSU), Polyethersulfon (PES), Polyphenylsulfone (PPSU), Polyvinylidenfluorid (PVDF), Polyetherketone (PEK) oder Polytetrafluorethylen (PTFE).

Das Backblech kann eine Breite von zumindest 0,6 m und/oder eine Länge von zumindest 0,8 m aufweisen. Das Backblech kann auch eine Breite von zumindest 0,8 m und/oder eine Länge von zumindest 1,5 m bzw. 1,8 m aufweisen. Trotz der Größe des Backblechs ist es relativ leicht, da das Muldenblech aus einem dünnwandigen Material ausgebildet ist.

Die Erfindung wird nachfolgend beispielhaft näher anhand von einem in den Zeichnungen gezeigten Ausführungsbeispiel erläutert. Die Zeichnungen zeigen in:
- Figur 1a: ein Ausführungsbeispiel eines Backblechs in der Draufsicht mit einem teilweise ausgeschnittenen Bereich,
- Figur 1b: das Backblech aus Figur 1a in der Seitenansicht mit Blickrichtung auf die Längsseite,
- Figur 1c: in vergrößerter Darstellung den rechten Randbereich von Figur 1b,
- Figur 2a: einen Rahmen des Backblechs nach Figur 1a in der Draufsicht,
- Figur 2b: den Rahmen des Backblechs nach Figur 2a in der Seitenansicht
- Figur 2c: in vergrößerter Darstellung den rechten Rand des Rahmens aus Figur 2b,
- Figur 2d: einen Querschnitt durch eine Längsstrebe des Rahmens aus Figur 2a,
- Figur 2e: ein Halteblech des Rahmens aus Figur 2a in einer Ansicht von vorne,
- Figur 2f: das Halteblech aus Figur 2e in einer Seitenansicht,
- Figur 2g: eine rohrförmige Versteifungsstrebe in der Seitenansicht,
- Figur 2h: die rohrförmige Versteifungsstrebe nach Figur 2g in einer Stirnansicht,

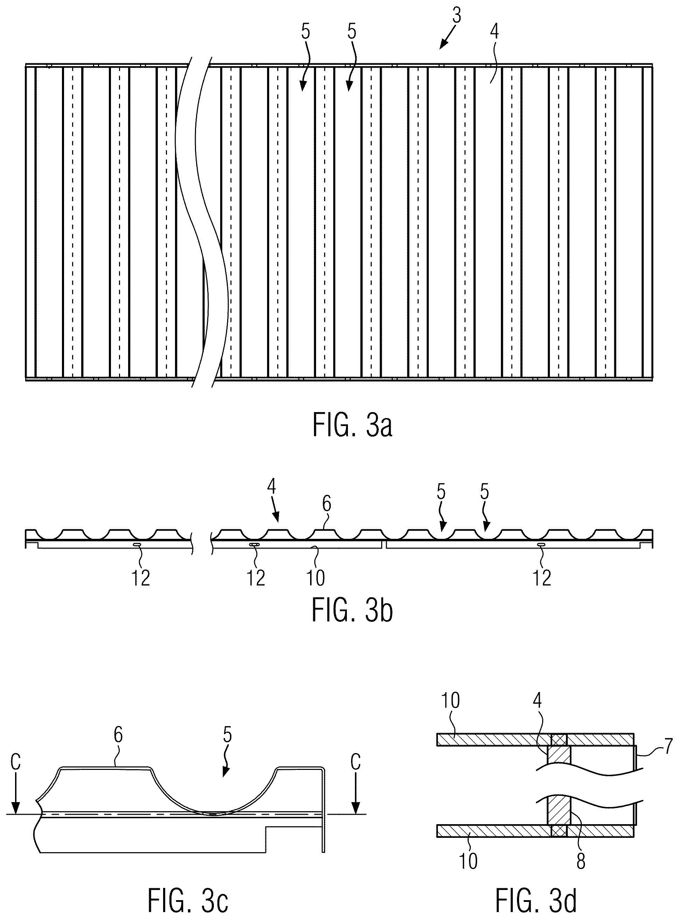

- Figur 3a: ein Inlay des Backblechs nach Figur 1a in der Draufsicht,
- Figur 3b: das Inlay aus Figur 3a in der Seitenansicht mit Blickrichtung auf die Längsseite,
- Figur 3c: in vergrößerter Darstellung den rechten Endbereich der Figur 3b,
- Figur 3d: einen Schnitt durch das Inlay entlang der Linie C-C in Figur 3c des rechten Endbereichs des Inlays aus Figur 3a bzw. Figur 3b,
- Figur 3e: das Inlay aus Figur 3a in einer Seitenansicht mit Blickrichtung auf eine Querseite,
- Figur 3f: in vergrößerter Darstellung den linken Rand des Inlays gemäß Figur 3e,
- Figur 4a: eine Leiste des Inlays aus Figur 3a-3f in einer Seitenansicht, wobei zur Verkürzung der Darstellung Teile herausgeschnitten sind,
- Figur 4b: die Leiste nach Figur 4a in einer Frontansicht,
- Figur 5a: ein Muldenblech des Inlays nach Figur 3a in der Draufsicht,
- Figur 5b: das Muldenblech aus Figur 5a in der Seitenansicht,
- Figur 5c: einen Ausschnitt des Muldenbleches, das als Lochblech ausgebildet ist,

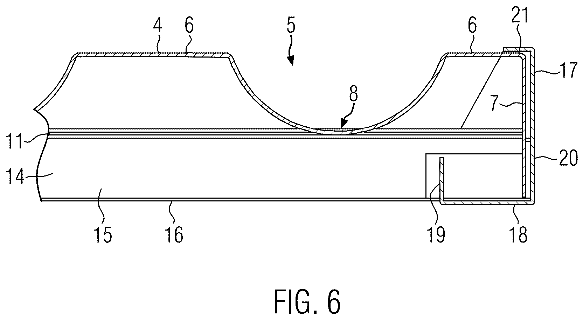

- Figur 6: den rechten Randbereich des Backblechs nach Figur 1A in einer Schnittdarstellung mit Blickrichtung auf eine Längsseite des Backblechs.

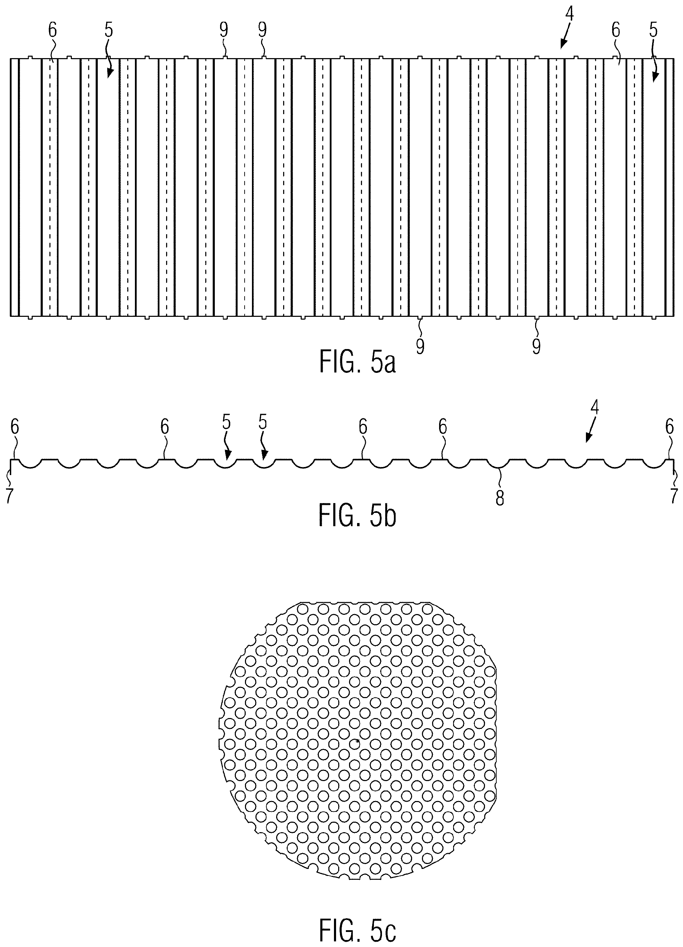

Ein Ausführungsbeispiel eines Backblechs 1 für industriell betriebene Backanlagen mit einem Rahmen 2 und einem Inlay 3 ist anhand der beigefügten Zeichnungen erläutert, wobei das Inlay 3 ein Muldenblech 4 mit regelmäßigen Mulden 5 aufweist (Figur 5a, 5b). Das Muldenblech 4 ist so geformt, dass es im Querschnitt (Figur 5b) mehrere parallel zueinander verlaufende Mulden 5 aufweist, die sich über die gesamte Breite des Muldenblechs 4 geradlinig erstrecken, wobei die benachbarten Mulden 5 jeweils ein Stück von einander beabstandet sind, sodass zwischen zwei benachbarten Mulden 5 jeweils ein Plateau 6 ausgebildet ist. An den stirnseitigen Enden des Muldenblechs 4 ist das jeweilige Plateau 6 zur Ausbildung einer Stirnwandung 7 nach unten abgewinkelt, wobei sich die beiden Stirnwandungen 7 mit ihren unteren freien Endkanten in einem Bereich unterhalb der Böden 8 der Mulden 5 erstrecken.

Das Muldenblech 4 besitzt in der Draufsicht eine etwa rechteckige Form (Figur 5a), wobei an den Mulden 5 im Bereich der Böden 8 jeweils eine seitlich vorstehende Lasche 9 angeformt ist.

Im vorliegenden Ausführungsbeispiel weist das Muldenblech 4 eine Länge etwa von knapp 2 m und eine Breite von etwa knapp 80 cm auf. Die Laschen sind etwa 12 mm breit und stehen etwa 8 mm am seitlichen Rand des Muldenblechs 4 vor.

Das Muldenblech 4 ist aus einem Lochblech (Figur 5c) ausgebildet. Die Löcher sind hier in einem regelmäßigen Raster angeordnet. Im vorliegenden Ausführungsbeispiel sind jeweils drei benachbarte Löcher an den Eckpunkten jeweils eines gleichseitigen Dreiecks angeordnet, wobei die Mittelpunkte der Löcher die Eckpunkte des gleichseitigen Dreiecks bilden. Die Ecken dieses gleichseitigen Dreieck sind jeweils 3,5 mm beabstandet. Die Löcher weisen einen Durchmesser von 2 mm auf. Im Rahmen der Erfindung können selbstverständlich auch Lochbleche mit anders dimensionierten Löchern vorgesehen sein. Die Dicke des Lochblechs beträgt im vorliegenden Ausführungsbeispiel 1,1 mm. Das Lochblech kann jedoch auch mit einer maximalen Dicke von 1,0 mm, insbesondere einer maximalen Dicke von 0,9 mm und vorzugsweise einer maximalen Dicke von 0,8 mm ausgebildet sein.

Die einzelnen Mulden 5 haben eine Tiefe von etwa 26 mm und die Längsmitten von benachbarten Mulden sind etwa 117 mm beabstandet. Eine jede Mulden 5 ist mit einem Radius von etwa 35 mm geformt.

Das Inlay 3 ist jeweils aus einem Muldenblech 4 und zwei Leisten 10 ausgebildet. Die Leisten 10 sind langgestreckte Blechstreifen, deren oberer Abschnitt einen Bördelabschnitt 11 bildet, der im rechten Winkel zum übrigen Abschnitt der Leiste 10 angeordnet ist und U-förmig zusammengedrückt bzw. gecrimpt ist, sodass in dem U-förmigen Bördelabschnitt 11 die Laschen 9 des Muldenblechs 4 eingeklemmt sind. Die Leisten 10 stehen somit etwas senkrecht nach unten am Rand des Muldenblechs 4 gegenüber den Mulden 5 vor. Lediglich die Stirnwandungen 7 des Muldenblechs 4 erstrecken sich ähnlich weit nach unten wie die Leisten 10.

An Stelle der Leisten mit U-förmigen Bördelabschnitt können auch andere Leisten, wie z.B. L-Profile vorgesehen werden, welche mit dem Muldenblech im Bereich der Mulden verbunden sind. Die Verbindungen können Schraubverbindungen, Toxen, Rastverbindungen, Nietverbindungen oder stoffschlüssige (z.B. Löten, Schweißen, Kleben) Verbindungen sein.

Das durch das Muldenblech 4 und die Leisten 10 ausgebildete Inlay 3 weist somit eine gewisse Eigensteifgkeit auf, da die einzelnen Mulden 5 in ihrer Position entlang der Leisten 10 fixiert sind. Die Kontur des Muldenblechs 4 in Verbindung mit der Fixierung der Mulden 5 durch die Leisten 10 macht es möglich, dass derartige Inlays 3 einfach gehandhabt werden können, ohne dass die Gefahr besteht, dass sie knicken, auch wenn das Muldenblech 4 selbst eine sehr geringe Dicke aufweist.

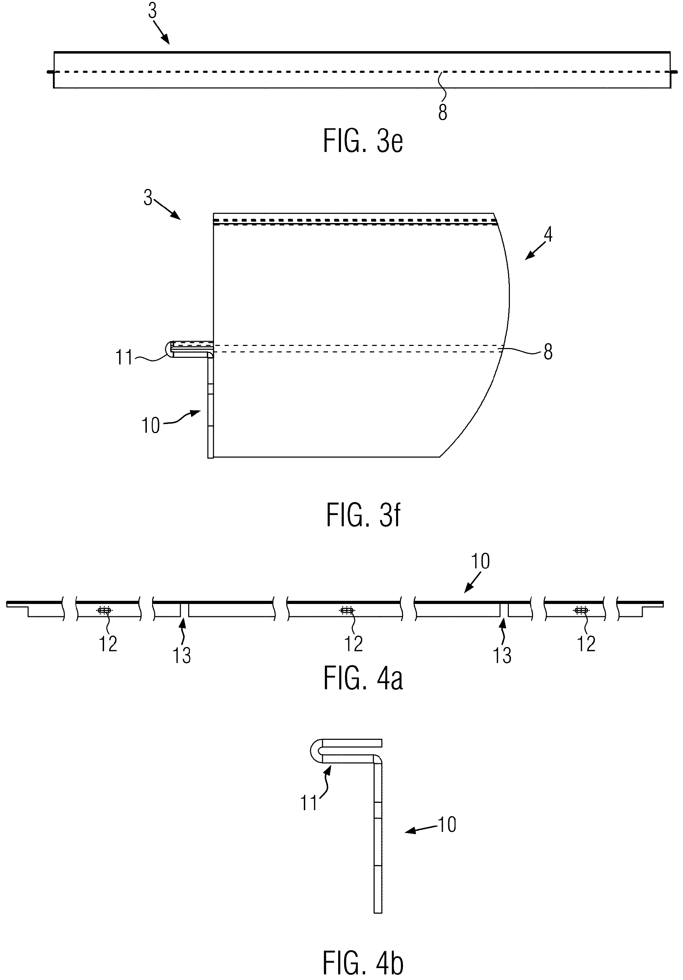

An den Leisten 10 sind an den nach unten vorstehenden Abschnitten an vorbestimmten Stellen Langlöcher 12 ausgebildet, die sich in Längsrichtung der Leisten 10 erstrecken. Die Langlöcher 12 dienen zur Fixierung des Inlays 3 am Rahmen 2, wie es unten näher erläutert wird. Die Leisten 10 können auch nach unten mündende Ausnehmungen 13 aufweisen (Figur 4a).

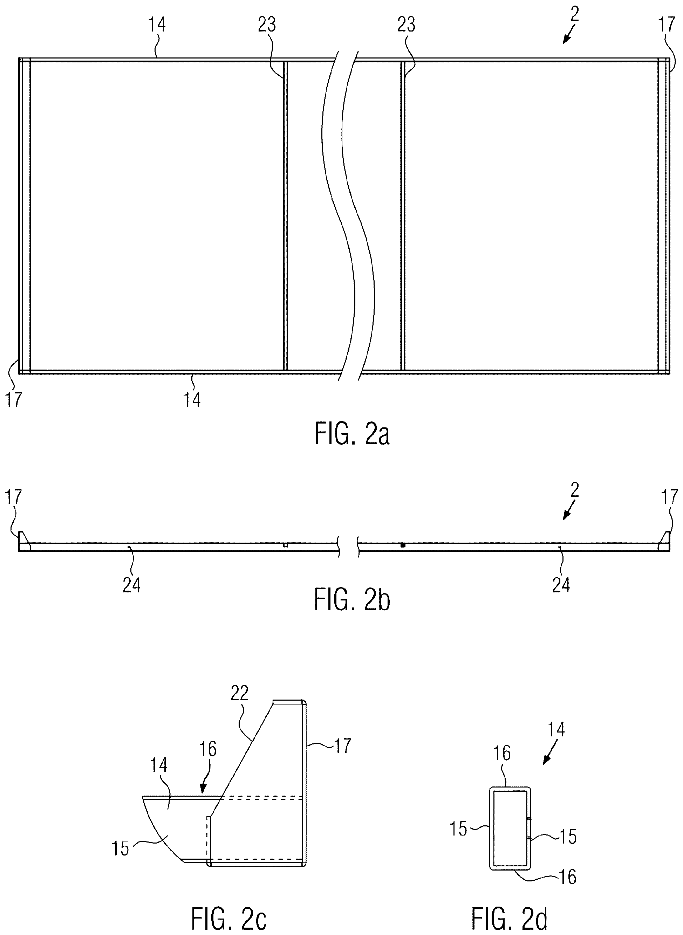

Der Rahmen 2 weist zwei Längsstreben 14 auf (Figur 2a-2d). Die Längsstreben 14 sind im vorliegenden Ausführungsbeispiel aus Stahl, insbesondere Nickel-Chrom-Stahl ausgebildet. Die Längsstreben 14 sind Hohlprofile mit einem rechteckförmigen Querschnitt (Figur 2d) mit zwei Breitseitenwandungen 15 und zwei Schmalseitenwandungen 16. Im vorliegenden Ausführungsbeispiel weisen die Breitseitenwandungen 15 eine Breite von 20 mm und die Schmalseitenwandungen 16 eine Breite von 10 mm auf. Die Breitseitenwandungen 15 verlaufen im Rahmen 2 vertikal und die Schmalseitenwandungen 16 horizontal. Die Längsstreben 14 bilden somit schlanke, hohe Profile mit einer größeren Höhe als Breite.

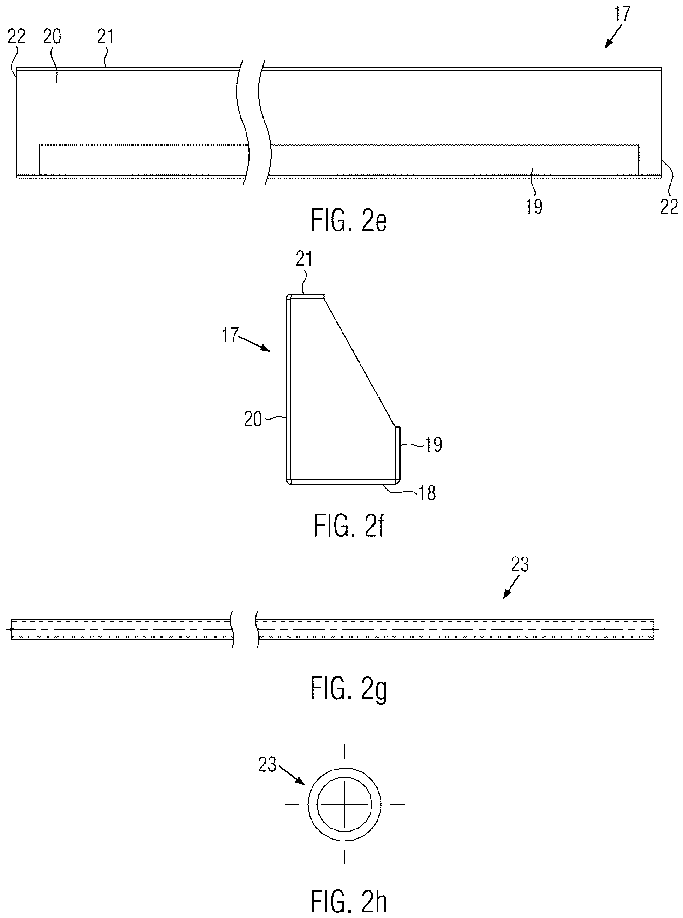

Die Enden der Längsstrecken 14 sind mittels Halteblechen 17 verbunden (Figur 2e, 2f). Die Haltebleche 17 weisen eine Bodenwandung 18, eine innere Begrenzungswandung 19 und eine äußere Begrenzungswandung 20 auf, die zusammen mit der Bodenwandung 18 einen U-förmigen Querschnitt ausbilden (Figur 2f), sodass sich die innere Begrenzungswandung 19 und die äußere Begrenzungswandung 22 jeweils vom Randbereich der Bodenwandung 18 vertikal nach oben erstrecken. Die innere Begrenzungswandung 19 weist eine Höhe auf, die etwa der Höhe der Längsstreben 14 entspricht. Die äußere Begrenzungswandung 20 überragt die innere Begrenzungswandung 19 um ein Vielfaches. Am oberen Rand der äußeren Begrenzungswandung 20 schließt sich eine in Richtung zur inneren Begrenzungswandung 19 etwa horizontal vorstehende Deckenwandung 21 an. An den Stirnseiten ist das Halteblech 17 jeweils durch eine Stirnwandung 22 abgeschlossen. Die innere Begrenzungswandung 19 erstreckt sich nicht über die gesamte Länge der Bodenwandung 18, sondern ist von den jeweiligen Stirnwandungen 22 ein Stück beabstandet, sodass in den hierdurch freigelassen Bereich das Ende einer Längsstrebe 14 zwischen der jeweiligen Stirnwandung 22 und dem Endabschnitt der inneren Begrenzungswandung 19 eingeführt werden kann. (Figur 2c, 2e). Die so eingeführten Längsstreben 14 sind mittels einer stoffschlüssigen Verbindung (Klebeverbindung, Lötverbindung oder Schweißverbindung) mit dem Halteblech 17 verbunden und bilden den in der Draufsicht rechteckförmigen Rahmen 2 (Figur 2a).

Diese Haltebleche 17 bilden somit einen zum Innenbereich des Backblechs 1 offenen Hohlraum der, wie es später genauer erläutert wird, zum Aufnehmen jeweils eines stirnseitigen Endbereichs des Inlays 3 dient.

Zwischen den Längsstreben 14 sind zwei Querstreben 23 angeordnet, die jeweils mit ihren Enden fest mit einer der beiden Längsstreben 14 verbunden sind. Eine solche Verbindung kann eine stoffschlüssige Verbindung (Klebeverbindung, Lötverbindung, Schweißverbindung) oder eine sonstige mechanische Verbindung, wie zum Beispiel eine Schraubverbindung sein. Die Querstreben 23 sind im vorliegenden Ausführungsbeispiel rohrförmig ausgebildet (Figur 2g, 2h). Die Querstreben 23 erhöhen die Steifigkeit des Rahmens 2 erheblich. Sie sind im vorliegenden Ausführungsbeispiel mit Abstand zu den Halteblechen 17 angeordnet. Im Rahmen der Erfindung ist es auch möglich, die Anzahl der Querstreben 23 zu variieren, wobei lediglich eine einzige Querstrebe 23 oder auch mehr als zwei Querstreben 23 vorgesehen sein können.

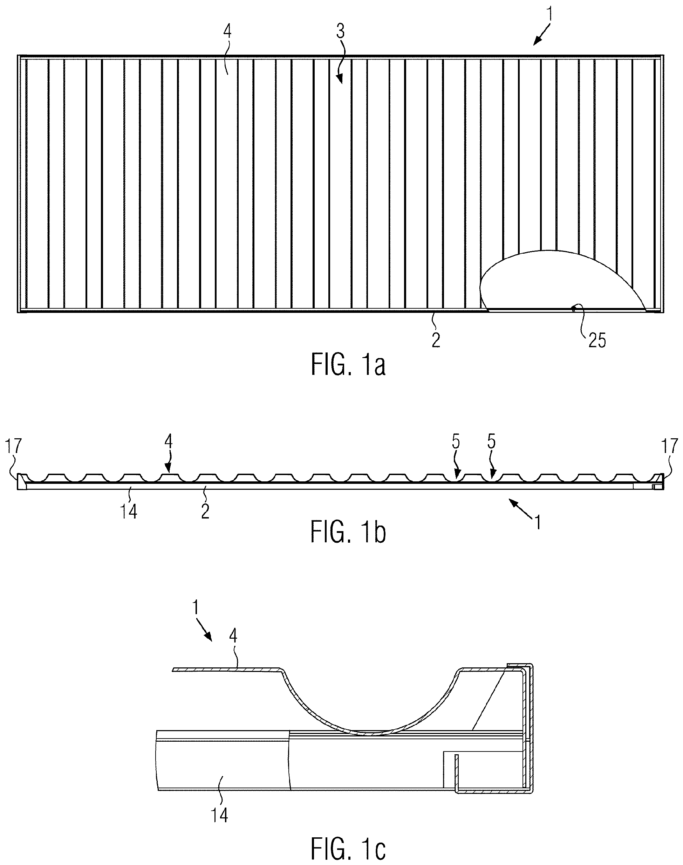

Die Längsstreben 14 weisen an ihren nach innen weisenden Breitseitenwandungen 15 Gewindebohrungen 24 auf (Figur 2b), in welche Schraubbolzen 25 (Figur 1a) zum Befestigen des Inlays 3 am Rahmen 2 eingesetzt sind. Die Schraubbolzen 25 erstrecken sich hierbei jeweils durch eines der Langlöcher 12 der Leisten 10. Das Inlay 3 ist mit den Stirnwandungen 7 des Muldenblechs 4 in den durch das Halteblech 17 begrenzten Hohlraum eingesetzt, sodass sich die Stirnwandungen 7 jeweils an der Bodenwandung 18 des Halteblechs 17 abstützen. Das Halteblech 17 umschließt somit die Stirnseiten des Muldenblechs 4 und erlaubt ein Spiel in Längsrichtung des Muldenblechs 4, da die Stirnwandungen 7 frei und in Längsrichtung des Muldenblechs 4 verschieblich auf der Bodenwandung 18 stehen. Das Muldenblech 4, das aus Aluminium oder einer Aluminiumlegierung ausgebildet ist, weist einen anderen Wärmeausdehnungskoeffizienten als der Rahmen 2 aus, bei dem zumindest die Längsstreben 14 aus Stahl ausgebildet sind. Hierdurch dehnt sich das Muldenblech 4 in Längsrichtung anders als der Rahmen 2 aus. Aufgrund des Spiels innerhalb des Halteblechs 17 können sich die Stirnseiten des Muldenblechs 4 bei Gebrauch bezüglich des Halteblechs 17 bzw. bezüglich des Rahmens 2 bewegen, ohne dass es zu Verspannungen kommt. Das Halteblech 17 stellt auch eine Auflagefläche für Paternoster-Aufzüge zur Verfügung, welche die Backbleche im Bereich der Stirnseiten von unten greifen.

Das oben erläuterte Ausführungsbeispiel eines Backblechs 1 mit einem Muldenblech 4 dient zum Backen von speziellen Backwaren, wie zum Beispiel Baguettes. Da die Längsstreben 14 des Rahmens 2 aus Stahl ausgebildet sind, sind sie sehr verschleißarm und es besteht keine Gefahr durch Abrieb beim Transport des Muldenblechs 4 durch eine industrielle Backstraße. Die schlanke Form der Längsstreben 14 bewirkt eine hohe Steifigkeit bei einer Belastung von oben auf das Muldenblech 4. Anderseits führt die schlanke Form der Längsstreben 14 gegenüber herkömmlichen Streben von Rahmen für Backbleche zu einer Gewichtseinsparung. Die Struktur des Inlays 3, welche aus dem konturierten Muldenblech 4 und den daran befestigten Leisten 10 ausgebildet ist, bewirkt eine relativ hohe Steifigkeit bei geringem Gewicht. Das Inlay 3 kann deshalb einfach und sicher gehandhabt und transportiert werden ohne die Gefahr einer Beschädigung. Dies gilt auch, wenn das Blech des Inlays 3 sehr dünn ist. Das Blech kann eine Dicke von maximal 1,1 bzw. 1,0 mm bzw. 0,9 mm bzw. 0,8 mm aufweisen. Das gesamte Backblech 1 ist einfach und leicht aufgebaut. Das Inlay 3 kann mit handelsüblichem Werkzeug ausgetauscht werden. Das geringe Gewicht des Backblechs 1 führt zu einem geringen Energieverbrauch einer industriellen Backstraße.

Das oben erläuterte Ausführungsbeispiel kann in unterschiedlichster Weise abgewandelt werden. So kann anstelle eines Lochblechs auch ein Streckmetall verwendet werden. Die Materialstärke kann im Bereich von 0,3 mm bis 1,5 mm liegen. Die Maschenweite kann 2 mm x 1,6 mm bis 40 mm x 10 mm betragen.

/Der Rahmen kann anstelle von Stahl aus hochtemperaturstabilem Kunststoff hergestellt sein. Bei Verwendung von Kunststoff kann entsprechend dem Material die Form des Rahmens abgewandelt sein. So kann es bei einem Rahmen aus Kunststoff Sinn machen, die Längsstreben und/oder die Querstreben aus einem Vollkörper auszubilden. Es können auch mehr Querstreben vorgesehen sein, wenn der Rahmen aus Kunststoff ausgebildet ist. Auch bei einem Rahmen aus Kunststoff ist eine Lagerung mit Spiel bzw. eine schwimmende Lagerung der Stirnseiten des aus Aluminium oder einer Aluminiumlegierung ausgebildeten Muldenblechs 4 zweckmäßig, da auch Kunststoff und Aluminium bzw. eine Aluminiumlegierung unterschiedliche Temparaturausdehnungskoeffizienten aufweisen.

### Bezugszeichenliste

- 1: Backbleck
- 2: Rahmen
- 3: Inlay
- 4: Muldenblech
- 5: Mulde
- 6: Plateau
- 7: Stirnwandung
- 8: Boden
- 9: Lasche
- 10: Leiste
- 11: Bördelabschnitt
- 12: Langloch
- 13: Ausnehmung
- 14: Längsstrebe
- 15: Breitseitenwandung
- 16: Schmalseitenwandung
- 17: Halteblech
- 18: Bodenwandung
- 19: innere Begrenzungswandung
- 20: äußere Begrenzungswandung
- 21: Deckenwandung
- 22: Stirnwandung
- 23: Querstrebe
- 24: Gewindebohrung
- 25: Schraubbolzen

## Patentansprüche

1. Backblech für industriell betriebene Backanlagen umfassend einen Rahmen und ein Inlay, wobei das Inlay als Muldenblech mit regelmäßigen Mulden ausgebildet ist und das Muldenblech aus einem Lochblech aus Aluminium oder einer Aluminiumlegierung mit ein Dicke von nicht mehr als 1,3 mm, insbesondere nicht mehr als 1,15 mm, oder
aus einem Streckmetall aus Aluminium oder einer Aluminiumlegierung ausgebildet ist, und
der Rahmen aus einem im Querschnitt rechteckigen Hohlprofil aus Stahl oder einem rechteckigen Hohlprofil oder einem Vollkörper aus einem Hochtemperaturkunststoff ausgebildet ist, und das Inlay an seinen Längsrändern Leisten aufweist, welche jeweils im Bereich einer jeden Mulde mit dem Muldenblech verbunden sind, wobei die Leisten mit lösbaren Verbindungselementen am Rahmen befestigt sind.

2. Backblech nach Anspruch 1,
**dadurch gekennzeichnet,**
**dass** das Hohlprofil des Rahmens zwei Breitseitenwandungen und zwei Schmalseitenwandungen aufweist, wobei die Breitseitenwandungen breiter als die Schmalseitenwandungen sind und die Schmalseitenwandungen etwa parallel zum Inlay und die Breitseitenwandungen etwa senkrecht zum Inlay angeordnet sind.

3. Backblech nach Anspruch 1 oder 2,
**dadurch gekennzeichnet,**
**dass** die Breitseitenwandung des Rahmens eine Breite von zumindest 10 mm, insbesondere zumindest 15 mm bzw. zumindest 20 mm und/oder die Schmalseitenwandung des Rahmens eine Breite von zumindest 5 mm und insbesondere zumindest 8 mm und vorzugsweise nicht mehr als 15 mm und insbesondere nicht mehr als 10 mm aufweist.

4. Backblech nach einem der Ansprüche 1 bis 3,
**dadurch gekennzeichnet,**
**dass** der Rahmen aus zwei geradlinigen Streben, insbesondere in Form von Hohlprofilen, ausgebildet ist, die an ihren Enden jeweils mit einem quer verlaufenden Halteblech verbunden sind.

5. Backblech nach Anspruch 4,
**dadurch gekennzeichnet,**
**dass** das Halteblech einen zum Innenbereich des Backbleches offenen Hohlraum zum Aufnehmen jeweils eines stirnseitigen Endbereichs des Inlays bildet.

6. Backblech nach einem der Ansprüche 1 bis 5,
**dadurch gekennzeichnet,**
**dass** am Muldenblech Laschen angeformt sind, die in entsprechende Ausnehmungen an den Leisten eingreifen oder von einem umgebördelten Abschnitt der Leisten umgriffen werden.

7. Backblech nach einem der Ansprüche 1 bis 6,
**dadurch gekennzeichnet,**
**dass** die Leisten des Inlays mittels einer Klemmverbindung, Rastverbindung oder Schraubverbindung am Rahmen befestigt sind.

8. Backblech nach einem der Ansprüche 1 bis 7,
**dadurch gekennzeichnet,**
**dass** der Rahmen Rastmittel aufweist, welche mit entsprechenden an den Leisten vorgesehenen Gegenrastmitteln zum Fixieren des Inlays am Rahmen zusammenwirken.

9. Backblech nach Anspruch 8,
**dadurch gekennzeichnet,**
**dass** die Rastmittel und Gegenrastmittel federbeaufschlagte Rastvorsprünge und entsprechende Rastausnehmungen, insbesondere sich in Längsrichtung der jeweiligen Leisten erstreckende Langlöcher, umfassen.

10. Backblech nach einem der Ansprüche 1 bis 9,
**dadurch gekennzeichnet,**
**dass** der Rahmen aus Nickel-Chrom-Stahl oder aus hochtemperaturstabilen Kunststoff ausgebildet ist, insbesondere aus Peek oder glasfaserverstärktem Peek, Perfluoralkoxycopolymere (PFA), Polyimid, Polyamidimid (PAI), Polysulfon (PSU), Polyethersulfon (PES), Polyphenylsulfone (PPSU), Polyvinylidenfluorid (PVDF), Polyetherketone (PEK) oder Polytetrafluorethylen (PTFE).

11. Backblech nach einem der Ansprüche 1 bis 10,
**dadurch gekennzeichnet,**
**dass** der Rahmen eine oder mehrere Querstreben aufweist.

12. Backblech nach einem der Ansprüche 1 bis 11,
**dadurch gekennzeichnet,**
**dass** das Backblech eine Breite von zumindest 0,6 m und/oder eine Länge von zumindest 0,8 m aufweist.
